# EUROPEAN PATENT SPECIFICATION

(11) **EP 2 345 810 B1**
(45) Date of publication and mention of the grant of the patent: **28.11.2012**
(21) Application number: 10000418.3
(22) Date of filing: 18.01.2010
(51) Int. Cl.: F03D 1/00

(54) **Arrangement and method of transportation for wind turbine tower segment**
Transportanordnung und Verfahren für Windturbinenturmsegment
Ensemble et procédé de transport de segment de tour d'éolienne

(43) Date of publication of application: 20.07.2011
(73) Proprietor: Siemens Aktiengesellschaft, 80333 München (DE)
(72) Inventor: Stiesdal, Henrik, 5000 Odense C (DK)

(56) References cited:
- EP-A1- 2 141 357
- WO-A1-2004/041589
- WO-A1-2004/083633
- US-A1- 2004 091 346
- US-A1- 2008 003 088

## Description

The present invention relates to a method and an arrangement of transportation for a wind turbine tower.

Towers for wind turbines are manufactured and delivered in segments.

Those segments are made out of steel plates welded together and have a typically cylindrical or conical shape. At the upper and the lower end of the tower segments are means for fastening like e.g. flanges to join the tower segments together or fasten the lowest tower segment to the foundation.

Those flanges are welded to the tower segment before shipping. At the erection site of the wind turbine these tower segments are mounted together or to the foundation by bolt connections.

As the tower segments are stored and transported in a horizontal position, the flanges also avoid unintentional deformation of the tower segment.

For onshore transport the tower segments are mounted on a lorry, which is specially adapted to the transport of those tower segments. The overall height of the transport equals the diameter of the tower segment plus a clearance between the lowest point of the tower segment and the street depending on the mounting on the lorry.

WO2004083633 describes a method of constructing large towers for wind turbines. In order to transport large size windmill towers, the invention suggests a steel tower for a windmill, comprising a number of cylindrical or tapered tower sections, at least the wider section of which being subdivided into two or more elongated shell segments, which combine into complete tower section by means of vertical flanges tightened together, e.g., by bolts, said shell being also provided with upper and lower horizontal flanges, respectively, to allow interconnection of tower sections one on top of each other.

US2008003088 describes an adjustable schnable system in which the ride height of the transport object may be adjusted by the operator. The adjustable schnable is comprised of a plurality of sections including front and rear portions having goosenecks and multiple axles therein. Vertical elevation of the goosenecks is controllable via hydraulic cylinders. Two pivotably adjustable arms are cooperatively engaged to both the front and rear goosenecks. Two v-type frames, having lateral beams, are pivotably mounted between and to each set of adjustable arms. The transport object, inserted between the two v-type frames, is held secure by compression forces. Raising the goosenecks causes the transport object to lift higher with respect to the adjustable schnable system, rather than causing movement of the lateral beam of the v-type frame in relation to the transport object. Control over the adjustable arms allows manipulation of the transport object ride height.

For the on-shore transport by lorry there are limitations in the maximum height of the transport in certain areas, which must not be exceeded, like e.g. bridges or tunnels. One example here is the Elbe Tunnel under the river Elbe in Hamburg, Germany, which allows a maximum height of 4.2 m.

With a given maximum height of the transport the maximum diameter of the tower segments is limited. Bigger diameters can not be transported on-shore on a lorry without extensive planning and time consuming detours, and are therefore not used for the realization of installations.

The object of this invention is to provide an improved method and arrangement of transportation of a tower segment to overcome the limitation of on-shore transportation.

This object is achieved by the present invention according to the features of claims 1 and 9.

Preferred configurations are object of the dependant claims.

According to the invention a method of transportation of a segment of wind turbine towers, comprises the step of aligning the longitudinal axis of the segment substantially horizontally during the transport characterized in that the method further comprises the step of deforming the tower segment in its cross section during the transport by applying a force, which acts on the wall of the tower segment.

For the transport of a tower segment with a diameter bigger then the maximum height of the transport minus the clearance between the tower segment and the street, the tower segment is elastically deformed during the transport.

In a preferred configuration the tower segment is deformed in its cross section in a horizontally longitudinal shape by the applied force.

Preferably the deformation is in an elastic area of the segment. Thus the segment is enabled to return in its original shape when the force is not applied any longer. If the force exceeds a certain limit the deformation of the segment will reach a so called "plastic area", where the deformation of the tower segment stays permanently. Preferably the wall of the tower segment shows a predefined flexibility, thus the applied gravitational force is used to deform the cross section of the segment.

Preferably the force for deformation is brought from inside the segment to its wall.

Preferably deforming means are used to apply the force. They are arranged in a way that the force is applied in horizontal and/or vertical direction to the cross section of the segment.

Preferably the force for the elastic deformation is varied.

Preferably the applied force pushes from outward to the wall. Thus the deforming means are detachably fixed to the outer side of the wall.

Preferably the deforming means act on the wall from outside the perimeter from different angles.

An arrangement for transportation of a segment of wind turbine towers, comprises a tower segment, whose longitudinal axis of the segment is substantially aligned horizontally during the transport. The arrangement further comprises deforming-means constructed and arranged in a way that a force is applied by the deforming-means to the wall of the tower segment to deform the cross section of the segment during its transport.

In a preferred embodiment the deforming means are active deforming means, thus the force is actively applied to the walls. For example a press or a ram may be used, which are driven e.g. hydraulically, pneumatically, mechanically or electrically.

It is possible to deform the tower segment elastically just before or at the beginning of the transport and keep it in the elastically deformed shape for the whole transport.

Calculations showed that the transportation height of a tower segment with a diameter of 4 m can be reduced about 20 cm by elastic deformation according to the invention.

The elastic deformation causes the segment to increase in width and decrease in height, thus the limitations on the maximum height are overcome.

Preferably the press is arranged as a set of presses, and the set of presses are arranged diametrically in view of the cross section of the segment.

Preferably the press is arranged as a set of presses, that a first press and a second press are arranged in the same cross section of the segment with an angle in between in view of the center point of the segment.

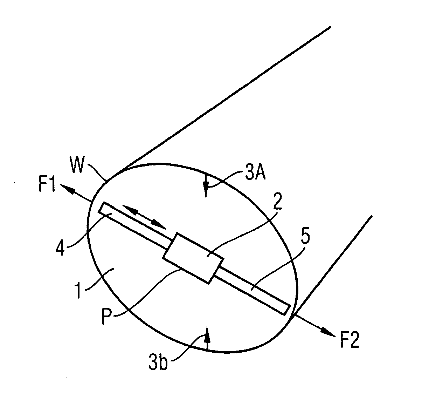

The invention is shown in more detail by help of a figure. Fig. 1 shows a tower segment 1 with a circular cross section. The segment 1 is oriented horizontally, thus its longitudinal axis is horizontal.

Within the tower segment is a press P. The press is used to apply the force F1, F2 for the elastic deformation. This press contains an actuator unit 2 and rams 4, 5 , which apply the force in horizontal direction to the wall W of the tower segment 1. The resulting elastic deformation causes a first decrease in the height 3a and a second decrease in the height 3b of the horizontal oriented tower segment 1.

## Claims

1. Method of transportation of a segment of wind turbine towers (1), comprising the step of aligning the longitudinal axis of the segment (1) substantially horizontally during the transport **characterized in that** the method further comprises the step of deforming the tower segment in its cross section during the transport by applying a force (F1, F2), which acts on the wall (W) of the tower segment (1).

2. Method according to claim 1 **characterized in that** the tower segment (1) is deformed in its cross-section in a substantially horizontally longitudinal shape, so that the height (3a, 3b) decreases and the width increases.

3. Method according to claim 2 **characterized in that** the deformation of the tower segment (1) is in an elastic range of the segment (1), thus the deforming of the segment (1) is reversible.

4. Method according to claim 3, **characterized in that** the wall of the tower segment shows a predefined flexibility and that the gravitational force is used as acting force.

5. Method according to claim 3 **characterized in that** a force (F1, F2) for deformation is applied to the wall (W) of the tower segment (1) in horizontal and/or vertical direction.

6. Method according to claim 3 **characterized in that** the force (F1, F2) for the elastic deformation is varied.

7. Method according to claim 3 or 4 **characterized in that** the force (F1, F2) is applied permanently during the transport.

8. Method according to one of the claims 1 to 3, **characterized in that** the force (F1, F2) is applied by a press (P).

9. Arrangement for transportation of a segment (1) of wind turbine towers, comprising
- a tower segment (1), whose longitudinal axis of the segment is substantially aligned horizontally during the transport,
- **characterized in that** the arrangement further comprises deforming-means (P) constructed and arranged in such a way that a force (F1, F2) is applied by the deforming-means (P) to the wall (W) of the tower segment (1) to deform the cross section of the segment (1) during its transport.

10. Arrangement according to claim 9 **characterized in that** the deforming means (P) is a hydraulic press or a pneumatic press or an electrical press.

11. Arrangement according to claim 9 or 10 **characterized in that** the press (P) is arranged inside the segment (1) to allow that the force (F1, F2) acts on the tower wall (W) from inside the tower segment (1).

12. Arrangement according to claim 9 or 10 **characterized in that** the press (P) is arranged outside the segment (1) to allow that the force (F1, F2) acts on the tower wall from outside the tower segment.

13. Arrangement according to claim 9 or 10 **characterized in**
- **that** the press (P) is arranged as a set of presses, and
- **that** the set of presses are arranged diametrically in view of the cross section of the segment (1).

14. Arrangement according to claim 9 or 10 **characterized in**
- **that** the press (P) is arranged as a set of presses,
- **that** a first press and a second press are arranged in the same cross section of the segment (1) with an angle in between in view of the center point of the segment (1).

## Patentansprüche

1. Verfahren zum Transport eines Segments (1) von Windkraftanlagentürmen, welches den Schritt des im Wesentlichen horizontalen Ausrichtens der Längsachse des Segments (1) während des Transports umfasst, **dadurch gekennzeichnet, dass** das Verfahren ferner der Schritt des Verformens des Turmsegments in seinem Querschnitt während des Transports durch Ausüben einer Kraft (F1, F2), welche auf die Wand (W) des Turmsegments (1) einwirkt, umfasst.

2. Verfahren nach Anspruch 1, **dadurch gekennzeichnet, dass** das Turmsegment (1) in seinem Querschnitt in einer im Wesentlichen horizontal-longitudinalen Form verformt wird, sodass sich die Höhe (3a, 3b) verringert und die Breite vergrößert.

3. Verfahren nach Anspruch 2, **dadurch gekennzeichnet, dass** die Verformung des Turmsegments (1) in einem elastischen Bereich des Segments (1) stattfindet, sodass das Verformen des Segments (1) reversibel ist.

4. Verfahren nach Anspruch 3, **dadurch gekennzeichnet, dass** die Wand des Turmsegments eine vordefinierte Flexibilität aufweist und dass die Schwerkraft als eine einwirkende Kraft verwendet wird.

5. Verfahren nach Anspruch 3, **dadurch gekennzeichnet, dass** eine Kraft (F1, F2) zur Verformung auf die Wand (W) des Turmsegments (1) in horizontaler und/oder vertikaler Richtung ausgeübt wird.

6. Verfahren nach Anspruch 3, **dadurch gekennzeichnet, dass** die Kraft (F1, F2) für die elastische Verformung variiert wird.

7. Verfahren nach Anspruch 3 oder 4, **dadurch gekennzeichnet, dass** die Kraft (F1, F2) während des Transports ständig ausgeübt wird.

8. Verfahren nach einem der Ansprüche 1 bis 3, **dadurch gekennzeichnet, dass** die Kraft (F1, F2) durch eine Presse (P) ausgeübt wird.

9. Anordnung zum Transport eines Segments (1) von Windkraftanlagentürmen, welche umfasst:
- ein Turmsegment (1), dessen Längsachse des Segments während des Transports im Wesentlichen horizontal ausgerichtet ist,
- **dadurch gekennzeichnet, dass** die Anordnung ferner Verformungsmittel (P) umfasst, die derart konstruiert und angeordnet sind, dass eine Kraft (F1, F2) durch die Verformungsmittel (P) auf die Wand (W) des Turmsegments (1) ausgeübt wird, um den Querschnitt des Segments (1) während seines Transports zu verformen.

10. Anordnung nach Anspruch 9, **dadurch gekennzeichnet, dass** das Verformungsmittel (P) eine hydraulische Presse oder eine pneumatische Presse oder eine elektrische Presse ist.

11. Anordnung nach Anspruch 9 oder 10, **dadurch gekennzeichnet, dass** die Presse (P) innerhalb des Segments (1) angeordnet ist, um zu ermöglichen, dass die Kraft (F1, F2) von innerhalb des Turmsegments (1) auf die Turmwand (W) einwirkt.

12. Anordnung nach Anspruch 9 oder 10, **dadurch gekennzeichnet, dass** die Presse (P) außerhalb des Segments (1) angeordnet ist, um zu ermöglichen, dass die Kraft (F1, F2) von außerhalb des Turmsegments auf die Turmwand einwirkt.

13. Anordnung nach Anspruch 9 oder 10, **dadurch gekennzeichnet,**
- **dass** die Presse (P) als ein Satz von Pressen angeordnet ist, und
- **dass** die Pressen des Satzes von Pressen in Bezug auf den Querschnitt des Segments (1) diametral angeordnet sind.

14. Anordnung nach Anspruch 9 oder 10, **dadurch gekennzeichnet,**
- **dass** die Presse (P) als ein Satz von Pressen angeordnet ist,
- **dass** eine erste Presse und eine zweite Presse in demselben Querschnitt des Segments (1) mit einem Winkel zwischen ihnen in Bezug auf den Mittelpunkt des Segments (1) angeordnet sind.

## Revendications

1. Procédé de transport d'un segment (1) de tours d'éolienne, comprenant l'étape d'alignement de l'axe longitudinal du segment (1) sensiblement horizontalement pendant le transport, **caractérisé en ce que** le procédé comprend en outre l'étape de déformation du segment de tour dans sa section transversale pendant le transport en appliquant une force (F1, F2), laquelle agit sur la paroi (W) du segment (1) de tour.

2. Procédé selon la revendication 1, **caractérisé en ce que** le segment (1) de tour est déformé dans sa section transversale à une forme longitudinale sensiblement horizontalement, de sorte que la hauteur (3a, 3b) diminue et la largeur augmente.

3. Procédé selon la revendication 2, **caractérisé en ce que** la déformation du segment (1) de tour est dans une plage élastique du segment (1), ainsi la déformation du segment (1) est réversible.

4. Procédé selon la revendication 3, **caractérisé en ce que** la paroi du segment de tour montre une flexibilité prédéfinie et **en ce que** la force de gravitation est utilisée comme force agissante.

5. Procédé selon la revendication 3, **caractérisé en ce qu'**une force (F1, F2) pour la déformation est appliquée à la paroi (W) du segment (1) de tour dans un sens horizontal et/ou vertical.

6. Procédé selon la revendication 3, **caractérisé en ce que** la force (F1, F2) pour la déformation élastique est fait varier.

7. Procédé selon la revendication 3 ou 4, **caractérisé en ce que** la force (F1, F2) est appliquée de façon permanente pendant le transport.

8. Procédé selon l'une des revendications 1 à 3, **caractérisé en ce que** la force (F1, F2) est appliquée par une presse (P).

9. Agencement pour le transport d'un segment (1) de tours d'éolienne, comprenant
- un segment (1) de tour, dont l'axe longitudinal du segment est sensiblement aligné horizontalement pendant le transport,
- **caractérisé en ce que** l'agencement comprend en outre un moyen de déformation (P) construit et agencé de telle manière qu'une force (F1, F2) est appliquée par le moyen de déformation (P) à la paroi (W) du segment (1) de tour pour déformer la section transversale du segment (1) pendant son transport.

10. Agencement selon la revendication 9, **caractérisé en ce que** le moyen de déformation (P) est une presse hydraulique ou une presse pneumatique ou une presse électrique.

11. Agencement selon la revendication 9 ou 10, **caractérisé en ce que** la presse (P) est agencée à l'intérieur du segment (1) pour permettre que la force (F1, F2) agisse sur la paroi (W) de tour de l'intérieur du segment (1) de tour.

12. Agencement selon la revendication 9 ou 10, **caractérisé en ce que** la presse (P) est agencée à l'extérieur du segment (1) pour permettre que la force (F1, F2) agisse sur la paroi de tour de l'extérieur du segment de tour.

13. Agencement selon la revendication 9 ou 10, **caractérisé en ce**
- **que** la presse (P) est agencée comme un ensemble de presses, et
- **que** l'ensemble de presses sont agencées diamétralement en regardant la section transversale du segment (1).

14. Agencement selon la revendication 9 ou 10, **caractérisé en ce**
- **que** la presse (P) est agencée comme un ensemble de presses,
- **qu'**une première presse et une deuxième presse sont agencées dans la même section transversale du segment (1) avec un angle entre celles-ci en regardant le point central du segment (1).
